Europäisches Patentamt

(19) European Patent Office  (11) Publication number: **0 108 179**

Office européen des brevets  **B1**

(12)  **EUROPEAN PATENT SPECIFICATION**

(45) Date of publication of patent specification: **25.03.87**  (51) Int. Cl.⁴: **G 01 N 27/56**

(21) Application number: **82306646.9**

(22) Date of filing: **13.12.82**

(54) Electrochemical device, cell and a method of operating the same.

(30) Priority: **08.10.82 JP 177048/82**

(43) Date of publication of application:
**16.05.84 Bulletin 84/20**

(45) Publication of the grant of the patent:
**25.03.87 Bulletin 87/13**

(84) Designated Contracting States:
**DE FR GB IT**

(56) References cited:
**EP-A-0 030 164**
**EP-A-0 035 400**
**EP-A-0 057 393**
**EP-A-0 057 899**
**EP-A-0 066 228**
**GB-A-2 054 868**
**GB-A-2 057 140**

(73) Proprietor: **NGK INSULATORS, LTD.**
**2-56, Suda-cho, Mizuho-ku**
**Nagoya-shi, Aichi 467 (JP)**

(72) Inventor: **Mase, Syunzo**
**435, Aza-Motokinogo Ohaza-Tobishima-shinden**
**Tobishima-Mura Ama-Gun Aichi Pref. (JP)**
Inventor: **Soejima, Shigeo**
**25-70, Aza-Jiami Ohaza-Inokoshi**
**Idaka-Cho Meito-Ku Nagoya City (JP)**

(74) Representative: **Senior, Alan Murray et al**
**J.A. KEMP & CO 14 South Square Gray's Inn**
**London WC1R 5EU (GB)**

Courier Press, Leamington Spa, England.

## Description

This invention relates to an electrochemical cell of simple construction having excellent low-temperature performance characteristics and high durability, and the invention also relates to electrochemical devices including such a cell and to a method of operating the electrochemical cell.

A known electrochemical device for detecting or controlling oxygen concentration in fluids uses an oxygen concentration cell having a solid electrolyte such as a zirconia ceramic, which is an oxygen-ion-conductive solid electrolyte, and electrodes such as platinum electrodes mounted on opposite side surfaces of the solid electrolyte. The principles of such concentration cells have been used in other electrochemical devices such as detectors and pumps for hydrogen, nitrogen, carbon dioxide, sodium, and the like. To ensure satisfactory operation of the electrochemical devices such as the detectors and pumps in a low-temperature gas atmosphere, a variety of methods have been proposed.

For instance, U.S. Patent No. 4,212,720 teaches insertion of a metallic wire heater such as a "Nichrome" wire heater in an internal space of a hollow zirconia ceramic so as to selectively heat the zironica ceramic, and U.S. Patent No. 4,334,974 teaches provision of a heater which is attached via an insulating layer to one side surface of a planar oxygen concentration cell so as to selectively heat the oxygen concentration cell.

However, the electrochemical devices of the prior art have shortcomings in that their construction is complicated, their durability is low and their output voltages are susceptible to error due to deterioration of the solid electrolyte and the insulating layer by solid phase reactions therebetween at elevated temperatures and due to deterioration of the insulation resistance of the insulating layer at elevated temperatures.

In proposals of the type disclosed in EP—A—30 164 and EP—A—66 228 (having a priority of 25.05.81 and being published on 08.12.82) electrodes are applied on the same or opposite sides of a solid electrolyte in a concentration detector an AC voltage is applied thereacross. However, this necessitates a high voltage at the initial stage of heating, tending to lead to deterioration of the electrolyte and a long heating time and slow start up. In proposals of the type disclosed in EP—A—57 393 there is a heater which is in an insulation layer and is not in contact with the solid electrolyte.

An aim of the present invention is to reduce the above shortcomings.

According to the present invention, there is provided an electrochemical cell, for detecting and/or controlling the concentration of a component of a fluid, having a solid electrolyte a first electric conductor in direct contact with the solid electrolyte, a second electric conductor, which is to be exposed to the fluid including the component to be detected or controlled and in direct contact with the solid electrolyte at a spacing from the first electric conductor, characterised by third electrical conductors which connect opposite ends of at least one of the first and second conductors to an AC power source, whereby said electrochemical cell can be heated by thermal energy generated in said at least one of the first and second electric conductors.

The invention also provides an electrochemical cell including an electrolytic cell and a concentration cell, the electrolytic cell consisting of a pair of electrodes secured to a solid electrolyte and the concentration cell consisting of a pair of electrodes secured to the solid electrolyte or another solid electrolyte electrically conductively connected thereto; characterised in that a heater made of a conductor is secured to the or one of the solid electrolytes or to a further solid electrolyte electrically conductively connected thereto, the ends of said conductor being connected by electrical conductors to an AC power source; and in that a cavity or porous layer is adjacent a surface of the or each solid electrolyte with electrodes thereon, and allows access to such surface(s) with a given diffusion resistance of a fluid to be detected, one electrode of each of the electrolytical and concentration cells being so as to face the cavity or porous layer.

In some embodiments the electrolytic and concentration cells employ a single electrolyte and the maximum value of DC resistance between the separate electrodes which are positioned on one side of the solid electrolyte is larger than the DC resistance between the electrodes of the electrolytic cell.

There may be only one single electrolyte which is used in both cells and by the heater. In such a case the electrodes may all be on one face. In other embodiments the electrodes of the cells may be on respective faces of the electrolyte or electrolytes. In certain embodiments the electrodes of the electrolytic cell and the concentration cell positioning on one side of the solid electrolyte and/or facing the cavity or porous layer are common.

In another aspect, the invention provides a method of operating an electrochemical cell having first and second spaced electric conductors tightly secured to a solid electrolyte with one conductor being exposed to a fluid including a component to be detected or controlled, characterised by the step of passing an alternating current through at least one of said electric conductors through third conductors connected to opposite ends of said at least one electrical conductor so as to heat the electrochemical cell, and detecting or controlling the concentration of that component, which component causes an electrode reaction at said electrochemical cell.

The present invention is based on the discovery that if a solid electrolyte is heated by thermal energy generated in an electric conductor in direct contact with the solid electrolyte through application of an alternating current thereto, preferably an alternating current at a frequency higher than a certain value, then no electrolysis occurs in the solid electrolyte and no deterioration of the solid electrolyte is caused. Also, such electric conductor can be used as an electrode of an electrochemical cell formed of the solid electrolyte, which cell can be used in a concentration cell or a pump for certain substances.

The invention will be more clearly understood from the following description which is given by way of example only, with reference to the accompanying drawings, in which:

Figure 1 is a schematic sectional view of an oxygen concentration detector which is an embodiment of electrochemical device according to the present invention;

Figure 2 is an exploded perspective view of the essential portion of the oxygen concentration detector of Fig. 1, showing its mechanical construction and electric connection;

Figs. 3 and 4 are electric equivalent circuit diagrams of an electrochemical device according to the present invention;

Fig. 5 is a graph showing the complex impedance characteristics of an electrochemical cell according to the present invention;

Figs. 6 through 8 are exploded perspective views, showing mechanical constructions and electric connections of three different embodiments of electrochemical device of the invention;

Fig. 9 is a perspective view of another embodiment of the invention which uses a tubular solid electrolyte;

Fig. 10 is an exploded perspective view of another oxygen concentration detector according to the present invention, showing the mechanical construction and electric connection thereof;

Figs. 11—13 are perspective views of other embodiments of the invention; and

Fig. 14 is a graph showing the operation properties of the oxygen concentration detector of the invention.

Throughout different views in the drawings, numeral 1 is a solid electrolyte, 2 is a first electric conductor, 3 is a third electric conductor, 3' is an end portion with a protruded conductor in a through hole, 3A and 6A are terminals, 4, 25, and 36 are gastight layers, 5 is a hollow space, 6 and 6' are second electric conductors, 7 is a housing, 8 and 10 are openings, 9 is a heat insulating cylinder, 11 is a cap, 11A is a plug, 12 is a venthole, 13 is an insulator, 14 is a hole, 15 is a flange, 16 is a glass layer, 17 is a seal, 18 is a spring, 19 is a metallic washer, 20 is an AC power source, 21 is a potentiometer, 22 is a porous protective layer, 23 is a porous ceramic layer, 24 is an anode, 25A is a window, 26 is a reference electrode, 27 and 33 are capacitors, 28 is a diode, 29 and 32 are resistors, 30 is an inductor, 31 is an AC ammeter, 31D is a DC ammeter, 34 is a DC power source, 35 is a switch, 37 is a gas diffusing hole, 38 is a cavity, 39 is a protruded conductor of the end portion 3', 40 is a porous layer, 41, 42, 47 and 48 are electric conductors, 43 and 46 are solid electrolytes, 44 is a porous ceramic body and 45 is a gas diffusion hole.

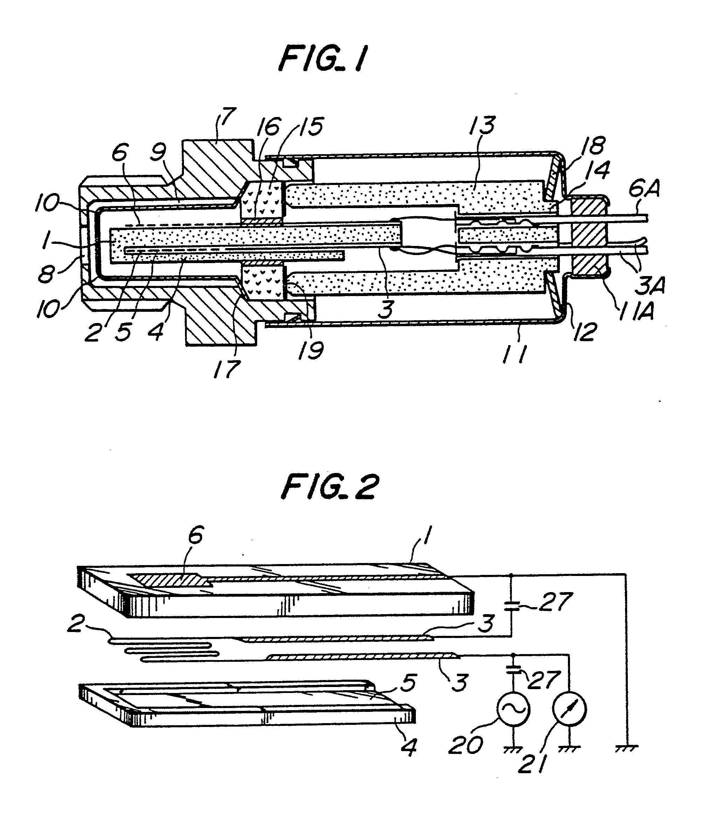

Referring to Fig. 1 showing an oxygen concentration detector as an embodiment of the electrochemical device of the invention and Fig. 2 showing an exploded view of an electrochemical cell in the detector of Fig. 1, a solid electrolyte 1 is made of zirconia ceramics containing added yttria. A first electric conductor 2 made of platinum is disposed on one side surface of the solid electrolyte 1 in direct contact therewith, and third electric conductors 3 are connected to opposite ends of the first electric conductor 2 so as to facilitate application of an AC voltage to the first electric conductor 2. The first electric conductor 2 acts both as a heater wire and a reference electrode of the oxygen concentration cell of the oxygen concentration detector, and the surface of the first electric conductor 2 is exposed to a fluid in a hollow space 5 defined between the solid electrolyte 1 and a gastight layer 4. A second electric conductor 6 made of platinum is disposed on the other side surface of the solid electrolyte 1 so as to form an electrode for a gas being measured. Thus, as an embodiment of the electrochemical cell of the invention, an oxygen concentration cell is defined by the solid electrolyte 1 having the first electric conductor 2 and the second electric conductor 6 mounted on opposite side surfaces thereof.

A housing 7 with an opening 8 and a heat insulating cylinder 9 with openings 10 enclose that end of the oxygen concentration cell which holds the second electric conductor 6 and the first electric conductor 2 disposed on the opposite surfaces of the solid electrolyte 1. A gas to be measured reaches the surface of the second electrode 6 through the opening 8 of the housing 7 and the openings 10 of the heat insulating cylinder 9. The other end of the oxygen concentration cell is enclosed by a cap 11 with ventholes 12 and an insulator 13 made of alumina ceramics with a hole 14, so that the air acting as a reference gas for the oxygen concentration detector of Fig. 1 reaches the surface of the reference electrode formed of the first electric conductor 2 through the venthole 12 of the cap 11 and the hole 14 of the insulator 13. The cap 11 snugly engages the housing 7 as shown in the figure. The housing 7 holds the oxygen concentration cell by a supporting flange 15 which engages the oxygen concentration cell with a glass layer 16 inserted therebetween. A seal 17 is packed in the space between the inside surface of the housing 7 and the flange 15, so that the gas to be measured is separated from the air by the combination of the flange 15, the glass layer 16, and the seal 17. To ensure the gastightness of the seal 17, a spring 18 secured to the inside surface of the cap 11 urges the insulator 13 and the flange 15 against the seal 17 held by the inside surface of the housing 7. A metallic washer 19 is inserted between the insulator 13 and the flange 15. The second electric conductor 6 and the third electric conductor 3 are connected to corresponding terminals 6A and 3A through lead wires, and a plug 11A fitted in one end of the cap 11 holds the terminals 6A and 3A.

When an AC power source 20 is connected to opposite ends of the first electric conductor 2 through capacitors 27 and the third electric conductors 3 as shown in Fig. 2, Joule heat is generated in the first electric conductor 2 by the alternating current from the AC power source 20, and the Joule heat thus generated acts to heat the solid electrolyte 1 in direct contact with the conductor 2. When the temperature of the solid electrolyte 1 rises to a certain level, it becomes oxygen-ion-conductive and a part of the alternating current in the first electric conductor 2 leaks into the solid electrolyte 1. It is noted that such leakage of the alternating current does not affect the DC component of the potential difference produced between the first electric conductor 2 and the second electric conductor 6 of the oxygen concentration cell, because as long as the positive half cycle and the negative half cycle of the alternating current leaking into the solid electrolyte 1 are symmetrical relative to the zero point of the alternating current, such alternating current does not cause any substantial chemical reaction at the interface between the first electric conductor 2 and the solid electrolyte 1. Accordingly, the oxygen concentration of the gas being measured can be accurately detected by measuring the DC component of the potential difference between the first electric conductor 2 and the second electric conductor 6 of the oxygen concentration cell by a potentiometer 21 while maintaining the alternating current through the first electric conductor 2 and the solid electrolyte 1. In this case, oxygen contained in the gas being measured is an example of that component of fluid being measured which component causes an electrode reaction, and the thus caused electrode reaction produces the above-mentioned DC component of the potential difference between the electric conductors 2 and 6. Preferably, the resistance of the third electric conductors 3 acting as the lead wires for passing the alternating current is smaller than the resistance between opposite ends of that portion of the first electric conductor 2 which is in contact with the predetermined heatable portion of the solid electrolyte 1, so that ouside the predetermined heatable portion the solid electrolyte should not be heated and any error of the electromotive force of the oxygen concentration cell due to the heating of such outside should be avoided.

Instead of the potentiometer 21, a DC power source can be connected across the first electric conductor 2 and the second electric conductor 6, so that oxygen is transmitted for instance from the second electric conductor 6 to the first electric conductor 2 in proportion to the amount of electric charge from the DC power source. In this case, the electrochemical cell can be used either as an oxygen pump or an oxygen concentration detector based on the principle of diffusion current caused by the above-mentioned transmission of oxygen.

The behaviour of the alternating current passed to the first electric conductor 2 will be described now in further detail.

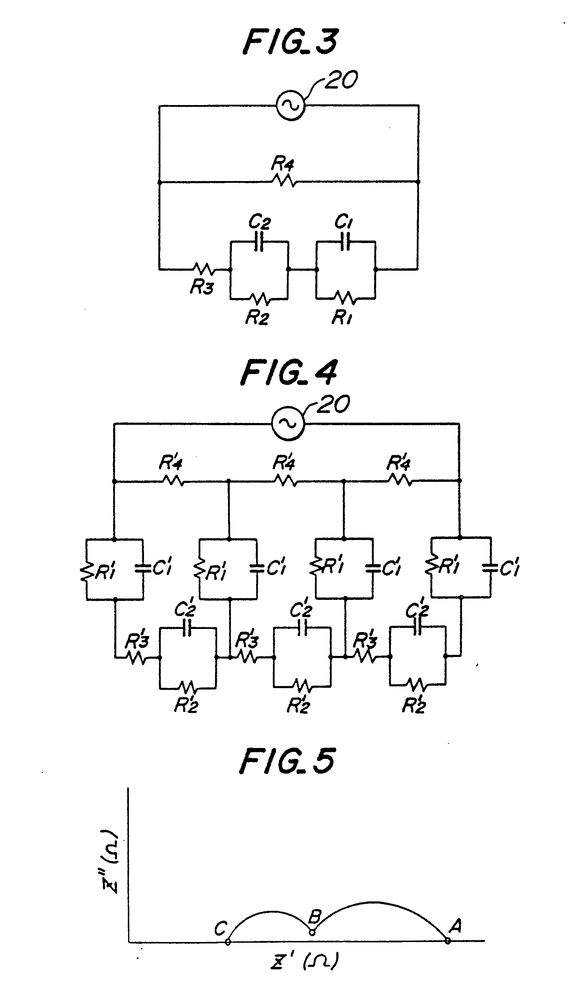

Fig. 3 shows an electric equivalent circuit of a heat generating portion consisting of the first electric conductor 2 and the solid electrolyte 1. In the figure, $C_1$ is an electrostatic capacitance component representing polarization at the interface between the first electric conductor 2 and the solid electrolyte 1, $R_1$ is a polarization resistance component at the interface between the first electric conductor 2 and the solid electrolyte 1, $C_2$ is an electrostatic capacitance component due to the grain boundaries of the solid electrolyte 1, $R_2$ is a resistance component due to the grain boundaries of the solid electrolyte 1, $R_3$ is a resistance component representing resistances of the crystal grains of the solid electrolyte 1, and $R_4$ is the resistance of the first electric conductor 2.

In reality, the constants of the equivalent circuit of Fig. 3 are divided into a large number of similary defined constants $C_1'$, $R_1'$, $C_2'$, $R_2'$, and $R_3'$ relating to individual crystal grains constituting the solid electrolyte 1, and such divided constants are connected to resistances $R_4'$ of constituent sections of the first electric conductor 2 in a more complicated manner as shown in Fig. 4.

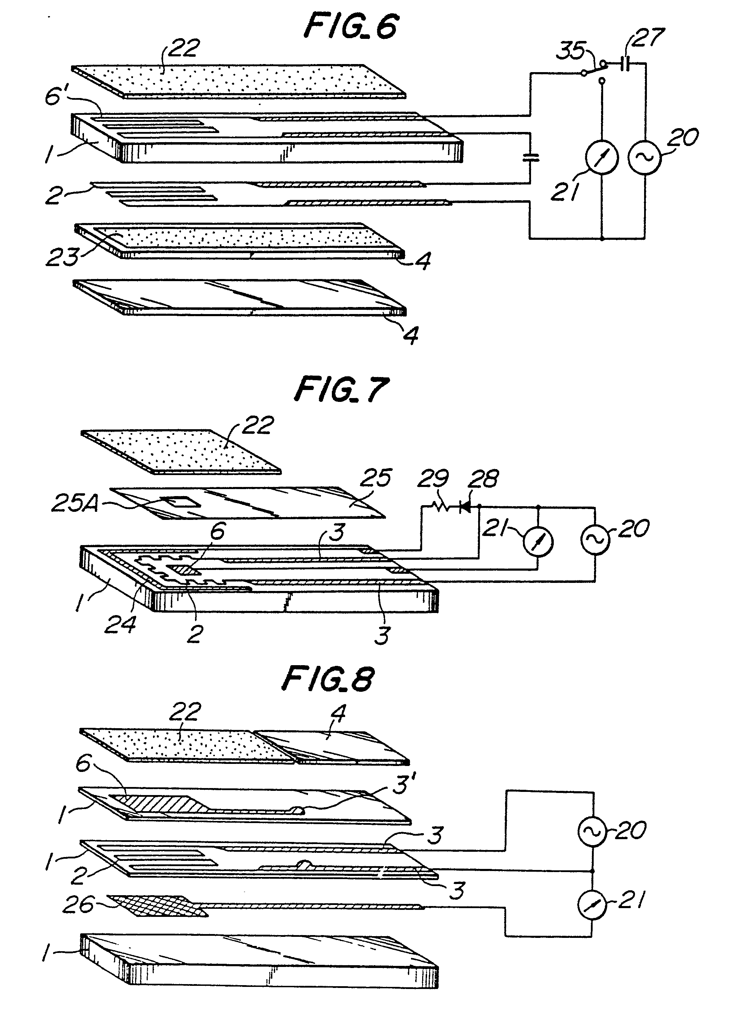

The frequency characteristics of the equivalent circuit of Fig. 3 can be expressed by a complex impedance formula $Z = Z' - jZ''$ which can be plotted as a curve including two continuous arcuate portions as shown in Fig. 5. In the figure, the resistance value of the point A corresponds to the quantity of $R_4(R_1 + R_2 + R_3)/(R_1 + R_2 + R_3 + R_4)$, the resistance value of the point B corresponds to the quantity of $R_4(R_2 + R_3)/(R_2 + R_3 + R_4)$, and the resistance value of the point C corresponds to the quantity of $R_3 \cdot R_4/(R_3 + R_4)$. The polarization from the point A to the point B on the frequency characteristics curve of Fig. 5 is mainly due to the resistance components $R_1$, $R_2$, $R_3$, and $R_4$ and the capacitance components $C_1$ and $C_2$, while that from the point B to the point C is mainly due to the resistance components $R_2$, $R_3$, and $R_4$ and the capacitance component $C_2$. As regards the variation of the complex inpedance characteristics with the frequency variation, the point A represents DC, and as the frequency increases, the complex impedance varies along the arcuate locus toward the point B and further along the arcuate locus toward the point C.

When a direct current or an alternating current at a low frequency in the neighbourhood of the point A of Fig. 5 is applied to the first electric conductor 2, most of the current flows through the resistance components $R_4$ and $R_1$, and only little of it flows through the capacitance component $C_1$. The polarization due to the resistance component $R_1$ is usually non-linear and has poor symmetry. If this polarization is too large, decomposition of the solid electrolyte and the peeling of the electric conductors can be caused, and the durability and the accuracy of measurement of the electromotive force are deteriorated.

When an alteranting current at a frequency in the neighbourhood of the point B or higher than that of the point B is passed to the first electric conductor 2, the interface impedance between the electric conductor 2 to which the alternating current is passed and the solid electrolyte 1 becomes largely independent of the interface capacitance between the electric conductor to which the alternating current is passed and the solid electrolyte and the alternating current flows mainly through the resistance components $R_4$ and the capacitance component $C_1$, and only litle of it flows through the resistance component $R_1$. More particularly, in this case, the polarization due to the alternating current through the solid electrolyte mainly consists of the polarization in the inside of the solid electrolyte, so that the alternating current hardly contributes to electrode reactions and excellent durability and accurate measurement of the electromotive force can be ensured.

The frequency for the point B of Fig. 5 varies depending on the kind, micro structure, temperature, and shape of the solid electrolyte used. For instance, in the case of a 1 mm thick zirconia ceramics electrolyte having a chemical composition of $(ZrO_2)_{0.94}(Y_2O_3)_{0.06}$ and containing 1 weight % of clay which electrolyte has the electric conductors mounted thereon as shown in Fig. 2, the frequency of the point B is 50 Hz at 350°C and 3 kHz at 600°C.

Furthermore, in the case of an oxygen concentration detector having a solid electrolyte consisting of zirconia ceramics with electric conductors made of platinum mounted to the ceramics as shown in Fig. 1, the resistance component $R_4$ of the electric conductor at the generally used operating temperature of about 600°C is about $10^1$ ohms and the sum of the resistances $(R_2 + R_3)$ of the crystal boundaries and the crystal grains of the solid electrolyte at about 600°C is about $10^4$ ohms, so that the heat generated in the solid electrolyte by the alternating current flowing through the solid electrolyte is very small.

Examples of the solid electrolyte to be used in the device and cell according to the present invention are the above-mentioned zirconia ceramics, β-alumina, aluminium nitride, NASICON (i.e. $Na_3Zr_2PSi_2O_{12}$), $SrCeO_3$, solid solutions of $Bi_2O_3$, oxides of other rare earth elements, $La_{1-x}Ca_xYO_{3-a}$ and the like. As to the material of the electric conductors, metals such as nickel, silver, gold, platinum, rhodium, paladium, iridium, ruthenium, tungsten, molybdenum, and the like, or alloys thereof are preferable because of their high durability, but compounds such as zinc oxide, $LaCrO_3$, $LaB_6$, SiC, and the like can be also used.

In order to securely fix the electric conductors to the solid electrolyte, a variety of methods are available; for instance, vacuum evaporation, sputtering, electroless plating, pyrolysis or reduction of a solution of salt of metal, baking of paste, cermet or flame spray, or other known methods for mounting electrodes to ceramics or the like. To prevent the evaporation and contamination of the electric conductors during operation, the electric conductors can be protected by heat-resisting coating or by embedding the electric conductor in the solid electrolyte. Preferably, fine powder of zirconia, alumina, or the like is mixed in the material of the electric conductors, so as to regulate the resistance of the electric conductors and to prevent the electric conductors from being peeled off or broken due to firing during operation.

The application of the alternating current to the electric conductor can be effected either continuously or intermittently for instance by using a switch 35 of Fig. 6. The switch 35 alternately connects the AC power source 20 and the potentiometer 21 to the electrochemical cell so as to alternately heat the solid electrolyte and detect the electromotive force produced therein.

In the device of the invention, it is possible to accurately measure the temperature of the electrochemical cell with excellent response to temperature change by measuring the impedance as seen from the opposite ends of the electric conductor, which impedance is a composite of the temperature-sensitive resistance of the electric conductor and the temperature-sensitive impedance of the solid electrolyte.

The construction of the electrochemical cell according to the present invention is not restricted to that of Fig. 2. For instance, in the embodiment of Fig. 6, a solid electrolyte 1 has a first electric conductor 2 secured to one side surface thereof and a second electric conductor 6' secured to the opposite side surface thereof, and the two electric conductors 2 and 6' are connected in series and an alternating current is passed to the serial conductors 2 and 6' from an AC power source 20. A porous protective layer 22 is disposed on that surface of the solid electrolyte 1 which carries the second electric conductor 6' in tight contact therewith, so that a gas to be measured can come in contact with the second electric conductor 6' secured to the solid electrolyte 1. On the other hand, a porous ceramic layer 23 is disposed on the opposite side surface of the solid electrolyte 1 carrying the first electric conductor 2, and the outer surface of the porous ceramic layer 23 is covered by a gastight layer 4, so that a reference gas is brought in contact with the first electric conductor 2 secured to the solid electrolyte 1.

Fig. 7 shows a different embodiment of the invention, in which a first electric conductor 2 made of tungsten, a second electric conductor 6 acting as an electrode for a gas to be measured, and an anode 24 are all disposed on the same side surface of a solid electrolyte 1. A gastight layer 25 made of a solid electrolyte and having a window 25A is disposed on the solid electrolyte 1 so as to cover the first electric conductor 2 and third electric conductors 3 connected thereto. A porous protective layer 22 covers the entire second electric conductor 6 through the window 25A of the gastight layer 25, the entire anode 24, and a part of the gastight layer 25. A small direct current is applied across the first electric conductor 2 and the anode 24, so that the first electric conductor 2 is polarized into a cathode. Desired concentration of a component of the gas being measured can be determined by measuring the potential difference between the first electric conductor 2 and the second electric conductor 6.

Fig. 8 shows an embodiment of the invention, in which a first electric conductor 2 is embedded in a solid electrolyte 1. More particularly, three solid electrolyte layers 1 are used, and a first electric conductor 2 with third electric conductors 3 connected to opposite ends thereof is sandwiched between the top layer 1 and the central layer 1, while a reference electrode 26 made of Ni-NiO mixture is sandwiched between the central layer 1 and the bottom layer 1, so that the first electric conductor 2 and the reference electrode 26 are embedded in the solid electrolyte 1 when the three layers thereof are joined one over the other. A second electric conductor 6 is disposed on the top surface of the solid electrolyte 1 as seen in Fig. 8, and a gas to be measured comes in contact with the second electric conductor 6 through a porous protective layer 22. A gastight layer 4 covers the third electric conductors 3 so as to seal them against the gas to be measured. An end portion 3' of the second electric conductor 6 has a protrude conductor 39 (dotted line) extending through a hole (not shown) of the top solid electrolyte layer 1 so as to complete an electric connection to one of the third electric conductors 3. An alternating current is applied from an AC power source 20 to the first electric conductor 2 through the third electric conductors 3. The desired measurement can be taken by measuring the potential difference between the second electric conductor 6 exposed to the gas being measured and the reference electrode 26 by a potentiometer 21 connected to the reference electrode 26 and the end portion 3' of the second electric conductor 6 through the third electric conductor 3.

In the present invention, a plurality of electrochemical cells provided in one solid electrolyte can be heated by passing alternate current into a conductor secured on said solid electrolyte and in this case, in order to avoid the interference between the respective electrochemical cells, for example an electrochemical cell which forms an electrolytic cell which controls concentration of fluid components concerning electrode reaction and an electrochemical cell which forms a concentration cell, which detects concentration of said components, it is desirable to use the following electrochemical cells.

Firstly is an electrochemical cell which comprises an electrolytic cell consisting of a pair of electrodes secured to both surfaces of a first layer-formed solid electrolyte, a concentration cell consisting of a pair of electrodes secured to both surfaces of a second layer-formed solid electrolyte, which is electrically conductively laminated to the first solid electrolyte, a heater made of a conductor which is secured to the first or second solid electrolyte or a solid electrolyte electrically conductively connected thereto (said heater may act the function of electrode of the electrolytic cell or concentration cell), and a cavity or a porous layer which is provided between the first solid electrolyte and the second solid electrolyte and connects to the outside through a porous body or a hole having a given diffusion resistance against a fluid to be detected, one electrode of the electrolytic cell being provided so as to face said cavitry or porous layer, one electrode of the concentration cell being provided so as to face said cavity or porous layer or being the same as the electrode of the electrolytic cell facing the cavity or porous layer, and other electrodes of the electrolytic cell and the concentration cell which do not face the cavity or porous layer being provided at an opposite side with respect to the electrode of the electrolytic cell facing the cavity or porous layer by inserting the first and second solid electrolytes.

A further electrochemical cell comprises an electrolytic cell consisting of a pair of electrodes secured to both surfaces of a layer-formed solid electrolyte, a concentration cell consisting of a pair of electrodes secured to both surfaces of said solid electrolyte, a heater made of a conductor which is secured to the solid electrolyte or a solid electrolyte electrically conductively connected thereto (said heater may act the function of an electrode of the electrolytic cell or concentration cell) and a cavity or porous layer, which is provided on one surface of the solid electrolyte and connects to the outside through a porous body or a hole having a given diffusion resistance against a fluid to be detected, one electrode of the electrolytic cell being provided so as to face the cavity or porous layer, one electrode of the concentration cell being provided so as to face the cavity or porous layer, and the maximum value of DC resistance between the separated electrodes positioned on the common side of the solid electrolyte being larger than the DC resistance between the electrodes of the electrolytic cell.

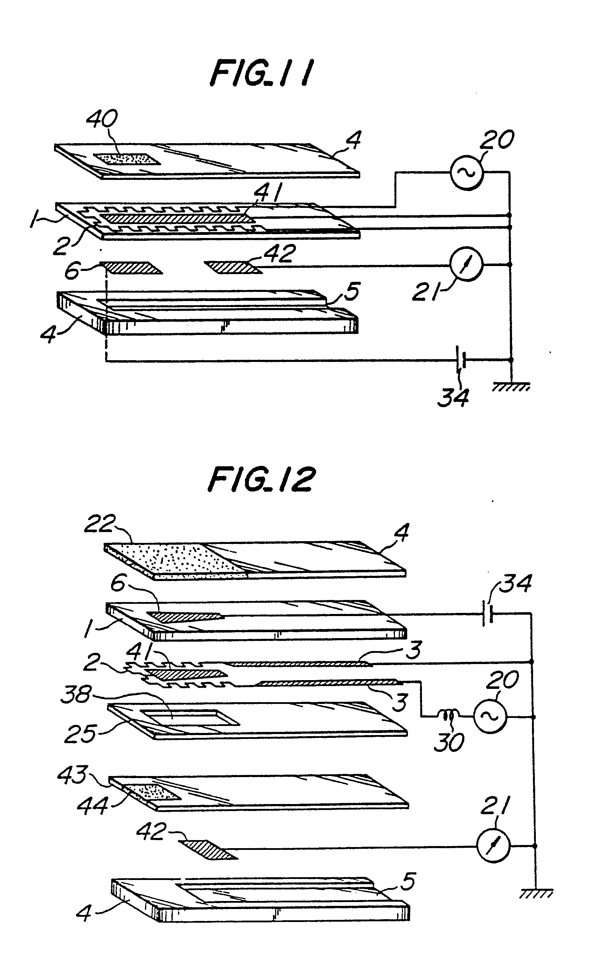

Figs. 11—13 are other embodiments of the invention and are exploded perspective views of oxygen concentration detectors provided in solid electrolytes in which an oxygen pump and an oxygen concentration cell are integrally disposed in a structure so that the relative interference is low.

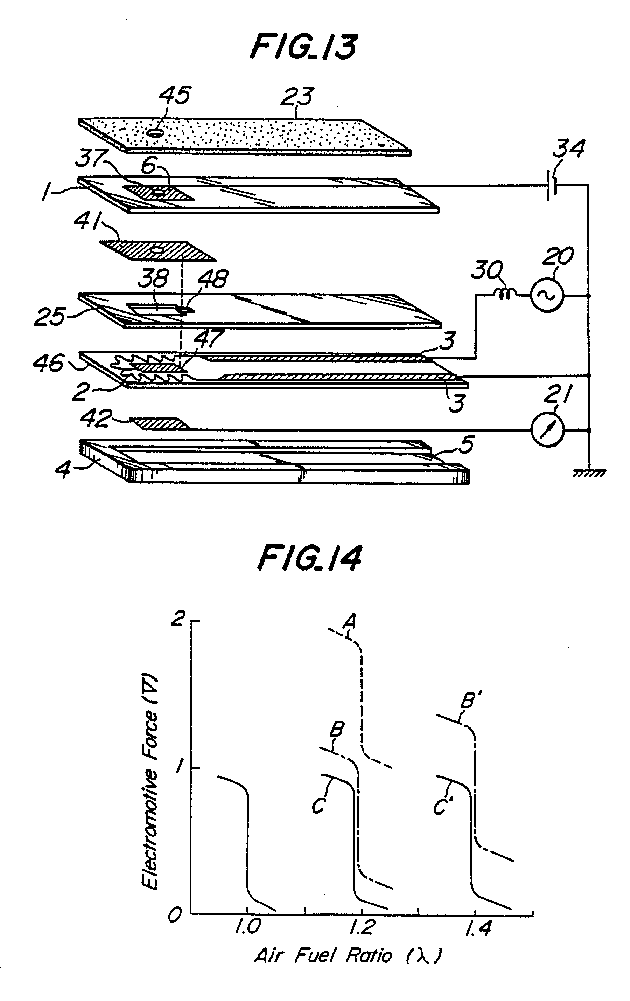

In Fig. 11, one side surface of a solid electrode 1 made of zirconia ceramics is provided with a porous platinum conductor 41, which is the cathode of the oxygen pump and also an electrode for gas being measured in the oxygen concentration cell, and a platinum-rhodium alloy conductor 2 which is a heater surrounding the conductor 41. A part of the conductor 41 connects to a gas being measured through a porous zirconia ceramic layer 40 and the other part of the conductor 41 and the conductor 2 are tightly sealed between the solid electrolytes 1 and 4. Another surface of the solid electrolyte 1 is provided with a porous platinum conductor 6, which is the anode of the oxygen pump, and a porous platinum conductor 42 which is another electrode of the oxygen concentration cell. The conductor 6 and the conductor 42 are exposed to a cavity 5 provided in a zirconia ceramics gastight layer 4 and are separately arranged at such a position that DC resistance between the conductor 6 and the conductor 42 is larger than DC resistance between the conductor 6 and the conductor 41. An alternating current of a frequency of 10 KHz is passed to both terminals of the conductor 2 from AC power source 20 to heat the solid electrolyte. Direct current is passed from DC power source 34 between the conductor 41 and the conductor 6 to make oxygen concentration at the interface between the porous layer 40 and the conductor 41 substantially zero. The oxygen concentration at the interface between the porous layer 40 and the conductor 41 is detected by a potentiometer 21 as an electromotive force of the oxygen concentration cell which is formed by the conductor 41, the solid electrolyte 1 and the conductor 42. The electromotive force in this case is shown by curves B and B′ in Fig. 14 and is smaller in influence upon the electromotive force due to direct current flowing to the oxygen pump than a curve A showing the potential difference between the conductor 6 and the conductor 41 which form the oxygen pump. It is not necessary to vary a threshold value of the electromotive force for detecting the oxygen concentration depending upon a value of the pump electric current and the detecting circuit can be simplified.

Fig. 12 is an exploded perspective view of an oxygen concentration detector which makes the influence of the electric current of the oxygen pump upon the electromotive force of the oxygen concentration cell smaller. One side surface of zirconia ceramic solid electrolyte 1 is provided with a porous platinum conductor 6 which is the anode of the oxygen pump and a surface of the conductor 6 is covered with a spinel porous protective layer 22. A lead wire portion of the conductor 6 is covered with zirconia ceramic gastight layer 4. Another surface of the solid electrolyte 1 is provided with a porous platinum conductor 41 which acts as a cathode of an oxygen pump together with an electrode for gas being measured of an oxygen concentration cell, and a platinum-rhodium alloy conductor 2 which becomes a heater and the conductor 41 are connected to a middle point of the conductor 2.

The conductor 41 is exposed to a cavity 38 provided in zirconia ceramic solid electrolyte 25 and the cavity 38 connects to a gas being measured through zirconia porous body 44 having a given gas diffusion resistance which is provided at one end of zirconia ceramic solid electrolyte 43. A porous platinum electrode 42 which is a reference electrode of the oxygen concentration cell is provided on a surface of the solid electrolyte 43 placed at an opposite side to the anode conductor 6 with respect to the cathode conductor 41 and the conductor 42 is exposed to a cavity 5 provided in zirconia ceramic gastight layer 4. Both terminals of the conductor 2 are connected to an AC power source of a frequency of 30 KHz through conductors 3 of lead portions and an inductor 30 to heat the solid electrolytes 1, 25 and 43.

Between the conductor 6 which is the anode of the oxygen pump and the conductor 41 which is the cathode is connected DC power source 34 to pass direct current and make the oxygen concentration in the cavity 38 substantially zero.

The electromotive force of the oxygen concentration cell formed by the conductor 41, the solid electrolytes 25 and 43 and the conductor 42 is shown by curves C and C′ in Fig. 14. The influence of the oxygen concentration cell of the electromotive force is smaller than that of Fig. 11 and the oxygen concentration can be more accurately detected without varying the threshold value of the electromotive force.

Fig. 13 is an embodiment of oxygen concentration detector which further lowers the impedance of the oxygen concentration cell and can more easily measure the electromotive force than the detector of Fig. 12.

One side surface of zirconia ceramic solid electrolyte 1 is provided with a porous platinum conductor 6 which is the anode of oxygen pump and the surface of the conductor 6 is coated with zirconia porous layer 23.

Another surface of the solid electrolyte 1 is provided with a porous platinum conductor 41 which is the cathode and has a larger area than the conductor 6, opposing to the conductor 6. The conductor 41 faces a cavity 38 formed in zirconia ceramic solid electrolyte 25. The cavity 38 connects to the gas being measured through gas diffusing holes 37 and 45. At the opposite side of the cavity 38 to the conductor 41, there is provided a porous platinum electrode 47, which is an electrode for gas being measured of an oxygen concentration cell provided on one side surface of a solid electrolyte 46. The conductor 47 is connected to the conductor 41 through platinum conductor 48 connecting both sides of the solid electrolyte 25 passing through a side surface of the cavity 38 and also connected to a middle point of the conductor 2. A conductor 42 which is a reference electrode of the oxygen concentration cell is provided opposing to the conductor 47 by inserting the solid electrolyte 46 between the conductor 42 and the conductor 47, and is exposed to a cavity 5 provided in zirconia gastight layer 4. Alternating current of a frequency of 1 KHz is passed to both terminals of the conductor 2 which is a heater, through a conductor 3 and an inductor 30 from AC power source 20 to heat the solid electrolytes 1, 25 and 46 and direct current is passed into the conductor 6 and the conductor 41 through the conductor 3 which is lead wires to control the oxygen concentration in the cavity 38 to substantially zero.

The oxygen concentration in the cavity 38 is detected by measuring the electromotive force of the oxygen concentration cell constructed with the conductors 42, 47 and the solid electrolyte 46, with a potentiometer 21.

In this construction, the conductor 41 is larger than the conductor 6 in area and the conductors 2, 42 and 47 are arranged in such a position that these conductors are DC sealed to the conductor 6, so that the amount of the pump current to the conductors 2, 42 and 47 is low and the opposing area of the conductors 42 and 47 forming the oxygen concentration cell is large, so that the impedance of the oxygen concentration cell can be lowered and an oxygen concentration cell having low noise and fast response rate can be obtained.

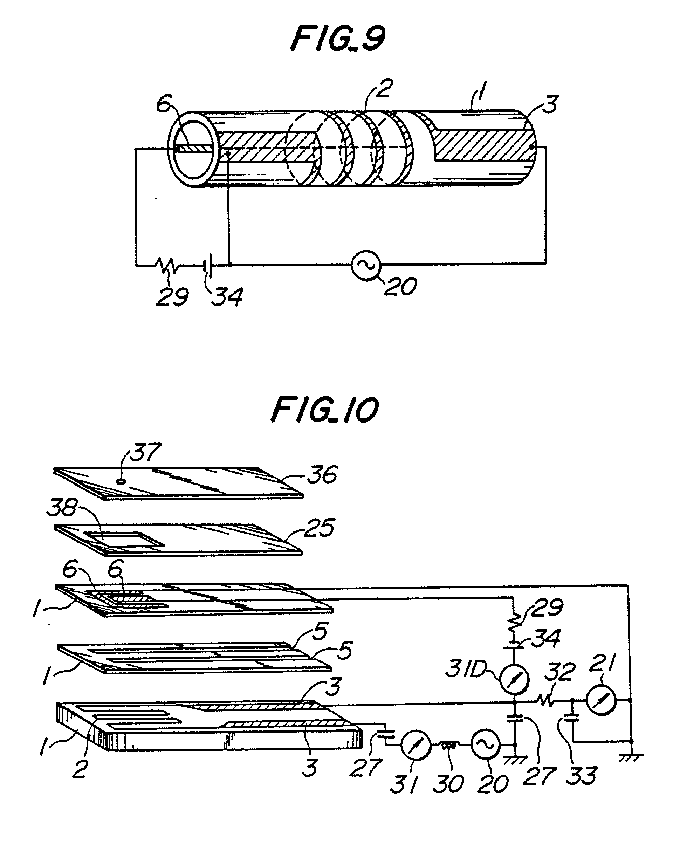

The shapes of the solid electrolyte 1, and the first and second electric conductors 2 and 6 are not restricted to be planar as shown in the preceding embodiments. In fact, the solid electrolyte 1 can be tubular with or without a bottom, and the first electric conductor 2 can be spiral, and the second and third electric conductors 6 and 3 can be curved, as shown in Fig. 9

In passing the alternating current to the electrochemical cell of the invention while taking measurement of the electromotive force thereof or feeding the direct current thereto for electrolysis, the number of lead wires from the power source to the electrochemical cell can be reduced by using a capacitor 27 as shown in Figs. 2 and 10. Such capacitor 27 isolates the alternating current from the DC circuitry for measuring the electromotive force of the electrochemical cell or for applying the direct current for electrolysis. The DC power source for electrolysis can be dispensed with by using a combination of a diode 28 and a resistor 29 for rectifying the current from the AC power source 20, as shown in Fig. 7.

Referring to Fig. 10, if an AC power source 20 producing rectangular waves or pulses is used, it is preferable to insert an inductor 30 in series with the AC power source 20, so as to prevent induction noise due to harmonics.

The temperature of the electrochemical cell can be detected by measuring the alternating current through it by an AC ammeter 31, because the temperature characteristics of the impedance of the electrochemical cell is known. To prevent erroneous operation due to leakage of an AC current to the potentiometer 21, a filter circuit formed of a resistor 32 and a capacitor 33 may be connected to the potentiometer 21.

The invention will be described in further detail now by referring to examples.

### Example 1

A 1 mm thick planar body was prepared by using a mixture consisting of 100 parts by weight of powder material containing 97 mole % of zirconia ($ZrO_2$) and 3 mole % of yttria ($Y_2O_3$), 1 part by weight of alumina ($Al_2O_3$) as a sintering aid, and 12 parts by weight of binder including 8 parts, by weight of polyvinyl butyral and 4 parts by weight of dioctyl phthalate.

Referring to Fig. 7, a first electric conductor 2 and alternating current receiving terminals thereof formed of third electric conductors 3 were printed on one side surface of the thus prepared planar body by the screen printing method while using a mixture containing 90 parts by weight of tungsten powder and 10 parts by weight of alumina powder. A windowed gastight layer 25 having the same chemical composition as that of the planar body was applied selectively on said one side surface of the planar body by the screen printing method, so as to cover the entire first electric conductor 2 and most of the third electric conductors 3 with the gastight layer 25, and the thus printed planar body was sintered at 1,400°C in a hydrogen atmosphere furnace for making the solid electrolyte 1. A second electric conductor 6 and an anode 24 both made of platinum were deposited on said one side surface of the solid electrolyte 1 at the positions as shown in Fig. 7 by the high-frequency sputtering method. A porous protective layer 22 made of spinel was coated on the second electric conductor 6, the anode 24, and the gastight layer 25 by the plasma flame spray method. Thus, the oxygen concentration detector according to the present invention was produced. In this detector, the electric resistance of the first electric conductor 2 at room temperature was 1.2 ohm and that of the third electric conductors 3 forming the terminals of the first electric conductor 2 at room temperature was 0.5 ohm.

The oxygen concentration detector was heated by applying an alternating current to the first electric conductor 2 through the third electric conductors 3 connected thereto from an AC power source 20 producing a 1 kHz output voltage of 2 V with a sinusoidal waveform. The temperature of the second electric conductor 6 reached 400°C in one minute after starting the application of the alternating current.

The output from the AC power source 20 was rectified by a diode 28 connected to a resistor 29, and the thus rectified DC voltage was applied across the anode 24 and the first electric conductor 2, so as to prevent the oxidation of the first electric conductor 2 and to stabilize the potential thereof as a reference electrode potential.

The performance of the oxygen concentration detector was tested by placing it in an exhaust gas of 200°C from an automobile engine. The concentration of oxygen in the exhaust gas, or the concentration of that component of a fluid being measured which causes an electrode reaction, was determined by measuring the electromotive force across the second electric conductor 6 and the first electric conductor 2 by a potentiometer 21. The result showed that the electromotive force was 709 mV in an exhaust gas with an air-fuel ratio λ of 0.95, and 820 mV in an exhaust gas with an air-fuel ratio λ of 1.05. No deterioration was noticed at all after continuously using the oxygen concentration detector in the automobile exhaust gas for 500 hours.

### Example 2

A 1 mm thick planar zirconia green body was prepared by using a mixture consisting of 100 parts by weight of powder material containing 92 mole % of zirconia ($ZrO_2$) and 8 mole % of ytterbium oxide ($YB_2O_3$), 1 part by weight of clay as a sintering aid, and 18 parts by weight of binder including 12 parts by weight of polyvinyl butyral and 6 parts by weight of dioctyl phthalate.

Referring to Fig. 10, a first electric conductor 2 and third electric conductor 33 were formed on one side surface of the thus prepared planar green body by the screen printing method while using a paste containing 95% of alloy powder and 5% of zirconia powder, which alloy powder included 80% of platinum and 20% of rhodium. A first 0.3 mm thick planar zirconia green body layer with the same chemical composition as that of the above-mentioned 1 mm thick planar green body was overlaid on said side surface of the planar green body, while forming hollow spaces 5 so as to expose a part of the first electric conductor 2 to the hollow spaces 5. Separately, a second 0.3 mm thick planar zirconia green body layer with the same chemical composition as that of the above-mentioned 1 mm thick planar green body was prepared, and second electric conductors 6 were formed thereon by printing a paste containing 95% of platinum powder and 5% of zirconia powder. The second 0.3 mm thick green body layer with the second electric conductors 6 was overlaid on the first 0.3 mm thick green body layer. To form a gastight layer 25, a third 0.3 mm thick zirconia green body layer with the same chemical composition as that of the above-mentioned 1 mm thick planar green body and having a cavity 38 was overlaid on the second 0.3 mm thick green body layer. A fourth 0.3 mm thick zirconia green body layer 36 with the same chemical composition as that of the above-mentioned 1 mm thick planar green body and having a gas diffusing hole 37 of 0.15 mm diameter was overlaid on the third green body layer for the gastight layer 25. The thus assembled green bodies were sintered at 1,450°C in air, so as to produce an oxygen concentration detector of the invention.

The thus produced oxygen concentration detector was heated by applying an alternating current to the first electric conductor 2 through the third conductors 3 connected thereto, capacitors 27, and AC ammeter 31, and an inductor 30 from an AC power source 20 producing a 40 kHz output voltage of 6 V with a rectangular waveform. The temperature of the second electric conductor 6 reached 730°C in 20 seconds after starting the application of the alternating current. The magnitude of the alternating current during the heating was 0.5 A, and this magnitude of the current proved to respond very quickly to changes in the outdoor temperature with a very high sensitivity.

The performance of the oxygen concentration detector was tested by placing it in a gas consisting of 95% of nitrogen ($N_2$) and 5% of oxygen ($O_2$) at 50°C. The oxygen concentration was determined by applying a direct current across the first electric conductor 2 and the second electric conductor 6 facing the gas diffusing hole 37 from a DC power source 34 through a resistor 29 and a DC ammeter 31D, until almost all oxygen in the cavity 38 was transferred to the hollow spaces 5 so as to cause the oxygen concentration in the cavity 38 to vanish to substantially zero, and measuring the magnitude of the direct current when the potential differences between the two second electric conductors 6 and the first electric conductor 2 varied suddenly in response to the vanishing-to-zero of the oxygen concentration in the cavity 38. The result showed that the direct current at the vanishing-to-zero of the oxygen concentration in the cavity 38 was 10 mA. Thus, the oxygen concentration detector of this example proved to be practicable as a detector including an oxygen pump.

### Example 3

A tubular solid electrolyte 1 with an outside diameter of 8 mm and an inside diameter of 6 mm as shown in Fig. 9 was prepared by using a proton-conductive electrolyte having a chemical composition of $SrCe_{0.95}Yb_{0.05}(O_{3-a}$ A first electric conductor 2 and third electric conductors 3 both made of nickel were desposited on the outer surface of the tubular solid electrolyte 1 by the high-frequency sputtering method. The resistance across opposite ends of the first electric conductor 2 was 1 ohm, while the resistance of the third electric conductors 3 was 0.2 ohm. A second electric conductor 6 was formed by applying a film of nickel paste on the inside surface of the tubular solid electrolyte 1 by brushing and firing the thus applied nickel paste film at 1,000°C in a nitrogen atmosphere.

The first electric conductor 2 was heated by applying an alternating current thereto through the third electric conductors 3 from an AC source 20 producing a 100 kHz output voltage of 10 V with a rectangular waveform. Consequently, the temperature of the solid electrolyte 1 reached 620°C in three minutes after starting the application of the alternating current. On the other hand, a direct current of 10 mA was applied across the first electric conductor 2 and the second electric conductor 6 from a DC power source 34 through a resistor 29, while passing dry oxygen through the inside space of the tubular solid electrolyte 1 at a rate of 10 ml/minute and exposing the outside of the solid electrolyte 1 to the open air. As a result, 0.7% of water was produced in the oxygen gas downstream of the inside space of the tubular solid electrolyte 1, which proved that the amount of proton which corresponded to the electric charge transmitted by the direct current moved from the first electric conductor 2 to the second electric conductor 6 through the solid electrolyte 1 so as to produce water by reacting with the oxygen flowing through the inside of the solid electrolyte 1. Thus it was confirmed by tests that the device of this example can be used for controlling the moisture in the gas flowing through the inside of the tubular solid electrolyte 1.

As described in detail in the foregoing, the electrochemical device and cell and the method of operating the cell according to the present invention are simple in construction yet highly effective in facilitating very quick heating of a solid electrolyte from a low temperature by using a low AC power source voltage, so as to provide excellent low-temperature performance of the electrochemical device and cell. Besides, the device and the cell of the invention are highly durable, because the solid electrolyte thereof is free from deterioration even after repeated heating. The electrochemical device and the cell can be used for detecting and controlling that component of a fluid which causes an electrode reaction in the cell. Examples of such component to be detected or controlled are oxygen, nitrogen, carbon dioxide gas, hydrogen, and sodium, but the invention is not restricted to such examples. Especially, the electrochemical device can be advantageously used as an oxygen concentration detector for exhaust gas from internal combustion engines, because the device can accurately determine the oxygen concentration of the exhaust gas at low temperature immediately after starting the engine or during low-speed running thereof. Accordingly, the present invention is very useful for detection and control of concentration of certain substances in various industries, especially in preventing air pollution caused by engine exhaust gas.

Although the invention has been described with a certain degree of particularity, it is understood that the present disclosure has been made only by way of example and that numerous changes in details of construction and the combination and arrangement of parts may be resorted to without departing from the scope of the invention as hereinafter claimed.

**Claims**

1. An electrochemical cell, for detecting and/or controlling the concentration of a component of a fluid, having a solid electrolyte (1), a first electric conductor (2) in direct contact with the solid electrolyte (1), a second electric conductor (6), which is to be exposed to the fluid including the component to be detected or controlled and in direct contact with the solid electrolyte (1) at a spacing from the first electric conductor (2), characterised by third electrical conductors (3) which connect opposite ends of at least one of the first and second conductors to an AC power source, whereby said electrochemical cell can be heated by thermal energy generated in said at least one of the first and second electric conductors.

2. An electrochemical cell according to claim 1, characterised in that the first electric conductor (2) is embedded in or secured to the surface of said solid electrolyte (1).

3. An electrochemical cell according to claim 1 or 2, characterised in that at least one of said first and second electric conductors (2, 6) forms at least one electrode of the electrochemical cell.

4. An electrochemical cell according to claim 1, 2 or 3, characterised in that the third electric conductors (3) are in direct contact with the solid electrolyte (1).

5. An electrochemical cell including an electrolytic cell and a concentration cell, the electrolytic cell consisting of a pair of electrodes secured to a solid electrolyte and the concentration cell consisting of a pair of electrodes (6, 42) secured to the solid electrolyte (1) or another solid electrolyte electrically conductively connected thereto; characterised in that a heater (2) made of a conductor is secured to the or one of the solid electrolytes or to a further solid electrolyte electrically conductively connected thereto, the ends of said conductor being connected by electrical conductors to an AC power source (20); and in that a cavity or porous layer (40) is adjacent a surface of the or each solid electrolyte with electrodes thereon, and allows access to such surface(s) with a given diffusion resistance of a fluid to be detected, one electrode of each of the electrolytical and concentration cells being so as to face the cavity or porous layer.

6. An electrochemical cell according to claim 5, wherein the electrolytic and concentration cells employ a single electrolyte and characterised in that the maximum value of DC resistance between the separate electrodes which are positioned on one side of the solid electrolyte is larger than the DC resistance between the electrodes of the electrolytic cell.

7. An electrochemical cell according to claim 5 or 6, characterised in that the solid electrolytes are laminated.

8. An electrochemical cell according to claim 5, 6 or 7, wherein there are two solid electrolytes with electrodes thereon, characterised in that the cavity or porous layer is provided between the first solid electrolyte and the second solid electrolyte.

9. An electrochemical cell according to any one of claims 5 to 8, characterised in that the electrodes of the electrolytic cell and the concentration cell positioning on one side of the solid electrolyte and/or facing the cavity of porous layer are common.

10. An electrochemical cell according to any one of claims 5 to 9, characterised in that said heater is one of the electrodes of one of the cells.

11. An electrochemical cell according to any preceding claim, characterised in that the or each solid electrolyte is oxygen-ion-conductive so that the electrochemical cell in use detects the oxygen concentration in a gas in contact therewith.

12. A method of operating an electrochemical cell having first and second spaced electric conductors (2, 6) tightly secured to a solid electrolyte (1) with one conductor being exposed to a fluid including a component to be detected or controlled, characterised by the step of passing an alternating current through at least one of said electric conductors through third conductors (3) connected to opposite ends of said at least one electric conductor so as to heat the electrochemical cell, and detecting or controlling the concentration of that component, which component causes an electrode reaction at said electrochemical cell.

13. A method according to claim 12, characterised in that said alternating current has a frequency sufficiently high that the interface impedance between said solid electrolyte and the electric conductor to which alternative current is passed is largely independent of the interface capacitance therebetween.

**Patentansprüche**

1. Elektrochemische Zelle zur Ermittlung und/oder Prüfung der Konzentration einer Flüssigkeitskomponente, mit einem Festelektrolyt (1), mit einem ersten elektrischen Leiter (2), der mit dem Festelektrolyt (1) in unmittelbarer Berührung ist, und mit einem zweiten elektrischen Leiter (6), der der die zu ermittelnde oder zu prüfende Komponente enthaltendenFlüssigkeit auszusetzen sowie mit Abstand vom ersten elektrischen Leiter (2) in unmittelbarer Berührung mit dem Festelektrolyt (1) ist, gekennzeichnet durch dritte elektrische Leiter (3), die entgegengesetzte Enden von wenigstens einem der ersten und zweiten Leiter mit einer Wechselstromquelle verbinden, so daß die elektrochemische Zelle durch in dem wenigstens einen der ersten und zweiten elektrischen Leiter erzeugte Wärmeenergie beheizbar ist.

2. Elektrochemische Zelle nach Anspruch 1, dadurch gekennzeichnet, daß der erste elektrische Leiter (2) in die Oberfläche des Festelektrolyten (1) eingebettet oder an dieser befestigt ist.

3. Elektrochemische Zelle nach Anspruch 1 oder 2, dadurch gekennzeichnet, daß wenigstens einer der ersten und zweiten elektrischen Leiter (2, 6) wenigstens eine Elektrode der elektrochemischen Zelle bildet.

4. Elektrochemische Zelle nach Anspruch 1, 2 oder 3, dadurch gekennzeichnet, daß die dritten elektrischen Leiter (3) mit dem Festelektrolyt (1) in unmittelbarer Berührung sind.

5. Elektrochemische Zelle, die eine Elektrolyse- sowie eine Konzentrationszelle umfaßt, wobei die Elektrolysezelle aus einem Paar von an einem Festelektrolyt befestigten Elektroden und die Konzentrationszelle aus einem Paar von am Festelektrolyt (1) oder an einem anderen, mit diesem elektrisch leitfähig verbundenen Festelektrolyt befestigten Paar von Elektroden (6, 42) besteht, dadurch gekennzeichnet, daß eine aus einem Leiter gebildete Heizeinrichtung (2) am einen der Festelektrolyte oder an einem weiteren, mit diesem elektrisch leitfähig verbundenen Festelektrolyt befestigt ist, wobei die Enden des Leiters über elektrische Leiter mit einer Wechselstromquelle (20) verbunden sind, und daß ein Hohlraum oder eine poröse Schicht (40) einer Fläche mit daran befindlichen Elektroden des einen oder von einem jeden Festelektrolyten benachbart ist sowie einen Zutritt zu dieser Fläche (diesen Flächen) mit einem vorgegebenen Diffusions-widerstand einer zu ermittelnden Flüssigkeit erlaubt, wobei eine Elektrode einer jeden der Elektrolyse- sowie Konzentrationszellen dem Hohlraum oder der porösen Schicht gegenüberliegend angeordnet ist.

6. Elektrochemische Zelle nach Anspruch 5, wobei die Elektrolyse- sowie Konzentrationszelle einen einzelnen Elektrolyt benutzen, dadurch gekennzeichnet, daß der minimale Wert eines Gleichstrom-Widerstandes zwischen den getrennten, an der einen Seite des Festelektrolyten angeordneten Elektroden größer ist als der Gleichstrom-Widerstand zwischen den Elektroden der Elektrolysezelle.

7. Elektrochemische Zelle nach Anspruch 5 oder 6, dadurch gekennzeichnet, daß die Festelektrolyte geschichtet sind.

8. Elektrochemische Zelle nach Anspruch 5, 6 oder 7 mit zwei Festelektrolyten, die Elektroden aufweisen, dadurch gekennzeichnet, daß der Hohlraum oder die poröse Schicht zwischen dem ersten und dem zweiten Festelektrolyt vorgesehen ist.

9. Elektrochemische Zelle nach einem der Ansprüche 5 bis 8, dadurch gekennzeichnet, daß die Elektroden der Elektrolyse- sowie der Konzentrationszelle, die an der einen Seite des Festelektrolyten angeordnet sind und/oder dem Hohlraum oder der porösen Schicht gegenüberliegen, gemeinsam sind.

10. Elektrochemische Zelle nach einem der Ansprüche 5 bis 9, dadurch gekennzeichnet, daß die Heizeinrichtung eine der Elektroden von einer der Zellen ist.

11. Elektrochemische Zelle nach einem der vorhergehenden Ansprüche, dadurch gekennzeichnet, daß der oder jeder Festelektrolyt für Sauer-stoffionen leitfähig ist, so daß die elektrochemische Zelle im Gebrauch die Sauerstoffkonzentration in einem mit ihr in Berührung befindlichen Gas ermittelt.

12. Verfahren zum Betreiben einer elektrochemischen Zelle mit einem ersten sowie zweiten zueinander beabstandeten elektrischen Leiter (2, 6), die an einem Festelektrolyt dicht anliegend befestigt sind und von denen ein Leiter einer eine zu ermittelnde oder zu prüfende Komponente enthaltenden Flüssigkeit ausgesetzt wird, gekennzeichnet durch den Schritt des Führens eines Wechselstroms durch wenigstens einen der elektrischen Leiter mittels dritter Leiter (3), die an entgegengesetzten Enden des wenigstens einen elektrischen Leiters zur Beheizung der elektrochemischen Zelle angeschlossen sind, und des Ermittelns oder Prüfens der Konzentration der Komponente, welche eine Elektrodenreaktion an der elektrochemischen Zelle hervorruft.

13. Verfahren nach Anspruch 12, dadurch gekennzeichnet, daß der Wechselstrom eine ausreichend hohe Frequenz hat, so daß die Grenzflächenimpedanz zwischen dem Festelektrolyt und dem elektrischen Leiter, dem der Wechselstorm zugeführt wird, in hohem Maß von der Grenzflächenkapazität zwischen diesen unabhängig ist.

**Revendications**

1. Cellule électrochimique pour détecter et/ou contrôler la concentration d'un composant d'un fluide, comprenant un électrolyte solide (1), un premier conducteur électrique (2) en contact direct avec l'électrolyte solide (1), un second conducteur électrique (6), qui doit être exposé au fluide comprenant le composant à détecter ou à contrôler et en contact direct avec l'électrolyte solide (1) à une certaine distance du premier conducteur électrique (2), caractérisée par des troisièmes conducteurs électriques (3) qui relient les extrémités opposées d'au moins l'un des premier et second conducteurs à une source de puissance en courant alternatif, ladite cellule électrochimique pouvant être ainsi chauffée par l'énergie thermique engendrée dans au moins l'un desdits premier et second conducteurs électriques.

2. Cellule électrochimique selon la revendication 1, caractérisée en ce que le premier conducteur électrique (2) est noyé dans ou fixé sur la surface dudit électrolyte solide (1).

3. Cellule électrochimique selon la revendication 1 ou 2, caractérisée en ce que l'un au moins desdits premier et second conducteurs électriques (2, 6) forme au moins une électrode de la cellule électrochimique.

4. Cellule électrochimique selon la revendication 1, 2 ou 3, caractérisée en ce que les troisièmes conducteurs électriques (3) sont en contact direct avec l'électrolyte solide (1).

5. Cellule électrochimique comprenant une cellule électrolytique et une cellule de concentration, la cellule électrolytique consistant en une paire d'électrodes fixées à un électrolyte solide et la cellule de concentration consistant en une paire d'électrodes (6, 42) fixées à l'électrolyte solide (1) ou à un autre électrolyte solide relié électriquement et de façon conductrice à celui-ci, caractérisée en ce qu'un élément chauffant (2) constitué par un conducteur est fixé à l'un des électrolytes solides ou à un autre électrolyte solide relié électriquement et de façon conductrice à ceux-ci, les extrémités dudit conducteur étant reliées par des conducteurs électriques à une source de puissance en courant alternatif (20), et en ce qu'une cavité ou une couche poreuse (40) est adjacente à une surface du ou de chaque électrolyte solide supportant des électrodes, et autorise l'accès à une telle surface ou de telles surfaces avec une résistance donnée à la diffusion d'un fluide à détecter, une électrode de chacune des cellules électrolytique et de concentration étant disposée de manière à être face à la cavité ou à la couche poreuse.

6. Cellule électrochimique selon la revendication 5, dans laquelle les cellules électrolytique et de concentration utilisent un unique électrolyte, et caractérisée en ce que la valeur maximale de la résistance en courant continu entre les électrodes séparées qui sont disposées sur un côté de l'électrolyte solide est supérieure à la résistance en courant continu entre les électrodes de la cellule électrolytique.

7. Cellule électrochimique selon la revendication 5 ou 6, caractérisée en ce que les électrolytes solides sont laminés.

8. Cellule électrochimique selon la revendication 5, 6 ou 7, dans laquelle sont prévues deux électrolytes solides avec des électrodes sur eux, caractérisée en ce que la cavité ou la couche poreuse est prévue entre le premier électrolyte solide et le second électrolyte solide.

9. Cellule électrochimique selon l'une quelconque des revendications 5 à 8, caractérisée en ce que les électrodes de la cellule électrolytique et de la cellule de concentration qui sont disposées sur un côté de l'électrolyte solide et/ou qui sont face à la cavité ou à la couche poreuse sont communes.

10. Cellule électrochimique selon l'une quelconque des revendications 5 à 9, caractérisée en ce que ledit élément chauffant est l'une des électrodes de l'une des cellules.

11. Cellule électrochimique selon l'une quelconque des revendications précédentes, caractérisée en ce que le ou chaque électrolyte solide est conducteur d'ions d'oxygène, de manière que la cellule électrochimique détecte, en utilisation, la concentration en oxygène dans un gaz qui est en contact avec elle.

12. Procédé pour utiliser une cellule électrochimique comprenant des premier et second conducteurs électriques espacés (2, 6) étroitement fixés à un électrolyte solide (1), un conducteur étant exposé à un fluide comprenant un composant à détecter ou à contrôler, caractérisé dans l'opération consistant à faire passer un courant alternatif par au moins l'un desdits conducteurs électriques au moyen de troisièmes conducteurs (3) reliés aux extrémités opposées dudit au moins un conducteur électrique de manière à chauffer la cellule électrochimique, et à détecter ou contrôler la concentration de ce composant, lequel composant provoque une réaction de l'électrode dans ladite cellule électrochimique.

13. Procédé selon la revendication 12, caractérisé en ce que ledit courant alternatif a une fréquence suffisamment élevée pour que l'impédance d'interface entre ledit électrolyte solide et le conducteur électrique dans lequel le courant alternatif passe soit largement indépendante de la capacitance d'interface entre eux.

## FIG. 1

## FIG. 2

## FIG.3

## FIG.4

## FIG.5

0 108 179

**FIG. 6**

**FIG. 7**

**FIG. 8**

3

# FIG.9

# FIG.10

## FIG. 11

## FIG. 12

## FIG.13

## FIG.14